# EUROPEAN PATENT APPLICATION

(11) **EP 3 733 728 A1**
(43) Date of publication of application: **04.11.2020**
(21) Application number: 19171742.0
(22) Date of filing: 30.04.2019
(51) Int. Cl.: C08G 18/08, C08G 18/12, C08G 18/32, C08G 18/38, C08G 18/42, C08G 18/66, C08G 18/72, C08G 18/73, C08G 18/75, C09J 175/06

(54) **AQUEOUS POLYURETHANE-UREA DISPERSION**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to an aqueous polyurethane-urea dispersion and a preparation process thereof, an adhesive containing the same, and an adhesion article obtained by adhering with said adhesive. The aqueous polyurethane-urea dispersion comprises a polyurethane-urea dispersed therein, said polyurethane-urea is obtained from a reaction of a system comprising the following components: a polyisocyanate mixture; a polyester polyol having a melting temperature of greater than 32 °C, wherein the melting temperature is measured by using a DSC-7 from Perkin-Elmer at 20-100 °C according to DIN 6 5467, and taken from the first temperature-rising curve; an emulsifier; an optional monohydroxy polyether and an optional diamine; the polyisocyanate mixture contains hexamethylene diisocyanate and dicyclohexylmethane diisocyanate, the amount of hexamethylene diisocyanate is 0.01 wt% - 25 wt%, the amount of dicyclohexylmethane diisocyanate is 0.01 wt% -6 wt%, based on the amount of the system as 100 wt%. The adhesive containing the aqueous polyurethane-urea dispersion of the present invention has a low activation temperature and a good mechanical property.

## Description

### Technical Field

The present invention relates to an aqueous polyurethane-urea dispersion and a preparation process thereof, an adhesive containing the same, and an adhesion article obtained by adhering with said adhesive.

### Background

When an aqueous polyurethane-urea dispersion is used as an adhesive to adhere the substrates, a thermal activation method is usually used. In this method, the aqueous polyurethane-urea dispersion is applied to a substrate. After water in the dispersion is completely evaporated, the adhesive is activated by heating to possess the adhesiveness. The heating can be carried out with an infrared heating radiator. The temperature at which the adhesive is converted to possess the adhesiveness is called as the activation temperature of the adhesive. The high activation temperature of the adhesive means the activation of the adhesive needs a high energy, and the manual adhesion becomes impossible. Therefore, it is generally desired in the industry that the adhesive has a lower activation temperature.

US 4 870 129 discloses an aqueous polyurethane-urea dispersion-based adhesive suitable for the thermal activation method. The aqueous polyurethane-urea dispersion is obtained by a reaction comprising hexamethylene diisocyanate and isophorone diisocyanate, and the activation temperature of the adhesive is 40 °C - 80 °C.

EP-A 0 304 718 discloses an adhesive, wherein the aqueous polyurethane-urea dispersion is obtained by a reaction comprising a specific amino compound. The specific amino compound is a primary and/or secondary monoamino compound, which is optionally mixed with a primary and/or secondary diamino compound having an average amino functionality of 1 - 1.9. The equivalent ratio of the isocyanate group of the isocyanate prepolymer to the total of hydrogen atoms active to the isocyanate in the reaction is 0.5 : 1 - 0.98 : 1.

US 8 557 387 discloses an adhesive, wherein the aqueous polyurethane-urea dispersion is obtained from a reaction comprising an amino mixture having an amino functionality of 1.65 - 1.95 and a prepolymer. The ratio of the amount of the isocyanate group in the prepolymer to the amount of the isocyanate-reactive amino compound and the isocyanate-reactive hydroxy compound is 1.04 - 1.9.

The above adhesives have a lower activation temperature, but have a worse mechanical property, which is manifested in the inability to combine high elongation at break and high tensile strength.

US 6 017 997 discloses an aqueous polyurethane-urea dispersion, which is obtained from a reaction comprising a polymer polyol containing two or more active hydrogens. The polymer polyol is in a liquid state at a temperature below 32 °C. The film formed with the aqueous polyurethane-urea dispersion has a good mechanical property, tensile strength of greater than 24 MPa, and 100% modulus of less than 3.1 MPa. However, the aqueous polyurethane-urea dispersion is unsuitable for the thermal activation and therefore cannot be used in the adhesive field.

Therefore, it is desirable in the industry to develop an adhesive having both a low activation temperature and a good mechanical property, which is characterized by high elongation at break and high tensile strength.

### Summary of the Invention

An object of the present invention is to provide an aqueous polyurethane-urea dispersion and a preparation process for the same, an adhesive containing the same, and an adhesion article obtained by adhering with said adhesive.

The aqueous polyurethane-urea dispersion according to the present invention comprises a polyurethane-urea dispersed therein, wherein said polyurethane-urea is obtained from a reaction of a system comprising the following components:
A) a polyisocyanate mixture;
B) a polyester polyol having a melting temperature of greater than 32 °C, wherein the melting temperature is measured by using a DSC-7 from Perkin-Elmer at 20-100 °C according to DIN 65467, and taken from the first temperature-rising curve;
C) an emulsifier;
D) an optional monohydroxy polyether; and
E) an optional diamine;
said polyisocyanate mixture contains hexamethylene diisocyanate and dicyclohexylmethane diisocyanate, the amount of hexamethylene diisocyanate is 0.01 wt% - 25 wt%, the amount of dicyclohexylmethane diisocyanate is 0.01 wt% - 6wt%, based on the amount of the system as 100 wt%.

According to an aspect of the present invention, the present invention provides a process for preparing the aqueous polyurethane-urea dispersion according to the present invention, which process comprises the following steps:
a. reacting some or all of a polyisocyanate mixture, a polyester polyol having a melting temperature of greater than 32 °C and an optional monohydroxy polyether to obtain a prepolymer, wherein the reaction is carried out in presence of an optional solvent that is miscible with water but inert to the isocyanate group or a solvent that is miscible with water but inert to the isocyanate group is optionally added after the reaction to dissolve the prepolymer;
b. reacting the prepolymer, an emulsifier, the polyisocyanate mixture that has not been added in step a, a polyester polyol having a melting temperature of greater than 32 °C that has not been added in st ep a, an optional monohydroxy polyether that has not been added in step a and an optional diamine to obtain the polyurethane-urea; and
c. before, during and after step b, water and an optional emulsifier are introduced to obtain the aqueous polyurethane-urea dispersion.

According to another aspect of the present invention, the present invention provides an adhesive containing the aqueous polyurethane-urea dispersion provided according to the present invention.

According to another aspect of the present invention, the present invention provides an adhesion article comprising substrates that have been adhered with the adhesive provided according to the present invention.

According to another aspect of the present invention, the present invention provides use of the aqueous polyurethane-urea dispersion provided according to the present invention in production of an adhesion article.

The activation temperature of the aqueous polyurethane-urea dispersion is closely relevant to the melting temperature of the polyester polyol in a crystalline form prepared for the same. The lower melting temperature of the polyester polyol represents the lower activation temperature of the aqueous polyurethane-urea dispersion.

The aqueous polyurethane-urea dispersion of the present invention is suitably applied in the fields of coating, adhesive, sealant, printing ink or the like, in particular adhesive. The adhesive containing the aqueous polyurethane-urea dispersion of the present invention has not only a low activation temperature, but also a good mechanical property such as elongation at break and tensile strength.

### Detailed Description of the Invention

The present invention provides an aqueous polyurethane-urea dispersion, which comprises a polyurethane-urea dispersed therein, wherein said polyurethane-urea is obtained from a reaction of a system comprising the following components:
A) a polyisocyanate mixture;
B) a polyester polyol having a melting temperature of greater than 32 °C, wherein the melting temperature is measured by using a DSC-7 from Perkin-Elmer at 20 - 100 °C according to DIN 65467, and taken from the first temperature-rising curve;
C) an emulsifier;
D) an optional monohydroxy polyether; and
E) an optional diamine;
said polyisocyanate mixture contains hexamethylene diisocyanate and dicyclohexylmethane diisocyanate, the amount of hexamethylene diisocyanate is 0.01 wt% - 25 wt%, the amount of dicyclohexylmethane diisocyanate is 0.01 wt% - 6 wt%, based on the amount of the system as 100 wt%. The present invention also provides a process for preparing the aqueous polyurethane-urea dispersion, an adhesive containing the aqueous polyurethane-urea dispersion, and an adhesion article obtained by adhering with said adhesive.

The aqueous polyurethane-urea dispersion of the present invention comprises an aqueous polyurethane dispersion, an aqueous polyurethane-polyurea dispersion and/or an aqueous polyurea dispersion.

### Polyisocyanate mixture

Said polyisocyanate refers to an isocyanate having an isocyanate functionality of not greater than 2.

The sum of the amount of hexamethylene diisocyanate and the amount of dicyclohexylmethane diisocyanate is preferably greater than 50 wt%, based on the amount of the polyisocyanate mixture as 100 wt%.

The sum of the amount of hexamethylene diisocyanate and the amount of dicyclohexylmethane diisocyanate is further preferably 60 wt% - 100 wt%, based on the amount of the polyisocyanate mixture as 100 wt%.

The sum of the amount of hexamethylene diisocyanate and the amount of dicyclohexylmethane diisocyanate is most preferably 80 wt% - 100 wt%, based on the amount of the polyisocyanate mixture as 100 wt%.

The amount of the dicyclohexylmethane diisocyanate is preferably 0.1 wt% - 5.5 wt%, based on the amount of the system as 100 wt%.

The amount of the dicyclohexylmethane diisocyanate is further preferably 0.1 wt% - 3.5 wt%, based on the amount of the system as 100 wt%.

The amount of the dicyclohexylmethane diisocyanate is further preferably 0.5 wt% - 3.5 wt%, based on the amount of the system as 100 wt%.

The amount of the dicyclohexylmethane diisocyanate is most preferably 0.5 wt% - 2 wt%, based on the amount of the system as 100 wt%.

The amount of the hexamethylene diisocyanate is preferably 0.1 wt% - 12 wt%, based on the amount of the system as 100 wt%.

The amount of the hexamethylene diisocyanate is further preferably 7 wt%-12 wt%, based on the amount of the system as 100 wt%.

The amount of the hexamethylene diisocyanate is most preferably 8 wt% - 9.5 wt%, based on the amount of the system as 100 wt%.

The polyisocyanate mixture can further contain another polyisocyanate. Said another polyisocyanate is preferably one or more of the following: an aliphatic isocyanate, an alicyclic isocyanate, an araliphatic isocyanate and an aromatic isocyanate.

Said aliphatic isocyanate can be one or more of the following: butylene diisocyanate, 2,2,4-trimethyl-hexamethylene diisocyanate, 2,4,4-trimethyl-1,6-hexylene diisocyanate and 1,8-diisocyanato-4-(isocyanatomethyl)octane.

Said alicyclic isocyanate can be one or more of the following: isophorone diisocyanate (IPDI), an isomeric bis-(4,4'-isocyanatocyclohexyl)methane and 1,4-cyclohexylene diisocyanate.

Said araliphatic isocyanate can be one or more of the following: m-xylylene diisocyanate (m-XDI), p-xylylene diisocyanate(p-XDI), tetramethyl-m-xylylene diisocyanate (m-TMXDI), tetramethyl-p-xylylene diisocyanate (p-TMXDI), 1,3-di-(isocyanatomethyl)-4-toluene, 1,3-di(isocyanatomethyl)-4-ethylbenzene, 1,3-di(isocyanatomethyl)-5-toluene, di(isocyanatomethyl)-2,5-dimethylbenzene, 1,4-di-(isocyanatomethyl)-2,3,5,6-tetramethylbenzene, 1,4-di(isocyanatomethyl)-5-tributylbenzene, di(isocyanatomethyl)-4-chlorobenzene, 1,3-di(isocyanatomethyl)-4,5-dichlorobenzene, 1,3-di(isocyanatomethyl)-2,4,5,6-tetrachlorobenzene, 1,4-di(isocyanatomethyl)-2,3,5,6-tetrachlorobenzene, 1,4-di(isocyanatemethyl)-2,3,5,6-tetrabromobenzene, 1,4-di(isocyanatomethyl)benzene and 1,4-di(isocyanatomethyl)naphthalene.

Said aromatic isocyanate can be one or more of the following: 1,4-diisocyanatebenzene, 2,4-diisocyanatotoluene, 2,6-diisocyanatotoluene, 1,5-naphthalenediisocyanate, 2,4'-diphenylmethane diisocyanate and 4,4'-diphenylmethane diisocyanate.

The amount of said polyisocyanate mixture is preferably 5 wt% - 30 wt%, most preferably 8 wt% - 15 wt%, based on the amount of the system as 100 wt%.

### Polyester polyol having a melting temperature of greater than 32 °C

Said polyester polyol is preferably a polyester polyol having a melting temperature of greater than 32 °C and less than 100 °C, wherein the melting temperature is measured by using a DSC-7 from Perkin-Elmer at 20 - 100 °C according to DIN 65467, and taken from the first temperature-rising curve.

Said polyester polyol is most preferably a polyester polyol having a melting temperature of greater than 40 °C and less than 60 °C, wherein the melting temperature is measured by using a DSC-7 from Perkin-Elmer at 20-100 °C according to DIN 65467, and taken from the first temperature-rising curve.

Said polyester polyol has a number-average molecular weight of preferably 400 - 5000, and the number-average molecular weight is measured at 40 °C with the gel permeation chromatography using tetrahydrofuran as the mobile phase and polystyrene as the standard control.

Said polyester polyol has a number-average molecular weight of most preferably 900 - 3500, and the number-average molecular weight is measured at 40 °C with the gel permeation chromatography using tetrahydrofuran as the mobile phase and polystyrene as the standard control.

Said polyester polyol has a functionality of the hydroxy (OH) group of preferably 1.8 - 2.2.

Said polyester polyol is preferably 1,4-butanediol polyadipate diol.

### Polyester polyol having a melting temperature of not greater than 32 °C

Said system can further contain a polyester polyol having a melting temperature of not greater than 32 °C.

The total amount of all polyester polyols in the system is preferably 70 wt% - 94 wt%, based on the amount of the system as 100 wt%.

The content of the polyester polyol having a melting temperature of greater than 32 °C is preferably 50 wt% - 100 wt%, further preferably 70 wt% - 100 wt%, most preferably 90 wt% - 100 wt%, based on the total amount of the polyester polyol in the system as 100 wt%.

### Emulsifier

The term "emulsifier" as used herein is a compound comprising an emulsifying group or a latent emulsifying group.

The amount of the emulsifier is preferably 0.1 wt% - 3 wt%, based on the amount of the system as 100 wt%.

The emulsifier preferably contains at least one isocyanate reactive group and at least one emulsifying group or latent emulsifying group.

The isocyanate reactive group is preferably one or more of the following: hydroxy, mercapto and amino.

The emulsifying group or latent emulsifying group is preferably one or more of the following: a sulfonic acid group, a carboxylic acid group, a tertiary amino group and a hydrophilic polyether.

The sulfonic acid group or the carboxylic acid group can be used directly in the form of their salts, such as a sulfonate salt or a carboxylate salt.

The sulfonic acid group or the carboxylic acid group can also be obtained by partially or completely adding a neutralizing agent to form the salt during or after the preparation of the polyurethane polymer.

Said neutralizing agent to form the salt is preferably one or more of the following: triethylamine, dimethylcyclohexylamine, ethyldiisopropylamine, ammonia, triethanolamine, dimethylethanolamine, sodium hydroxide, potassium hydroxide, lithium hydroxide, calcium hydroxide, and methyldiethanolamine, most preferably one or more of the following: triethylamine, dimethylethanolamine and ethyldiisopropylamine.

Said emulsifier is most preferably a sulfonic acid compound.

The sulfonic acid compound is preferably one or more of the following: 2-[(2-Aminoethyl)amino]ethanesulfonic acid, N-(3-aminopropyl)-2-aminoethanesulfonic acid, N-(3-aminopropyl)-3-aminopropanesulfonic acid and N-(2-aminoethyl)-3-aminopropanesulfonic acid.

### Monohydroxy polyether

The monohydroxy polyether is preferably one or more of the following: a copolymer of ethylene glycol and propylene glycol and polyethylene glycol.

The amount of the monohydroxy polyether is preferably 0 wt% - 3 wt%, most preferably 0.5 wt% - 3 wt%, based on the amount of the system as 100 wt%.

### Diamine

The diamine is preferably one or more of the following: diaminoethane, diaminopropane, diaminobutane, diaminohexane, piperazine, 2,5-dimethylpiperazine, 3-aminomethyl-3,5,5-trimethyl cyclohexyl amine (isophorondiamine, IPDA), 4,4'-diaminodicyclohexyl methane, 1,4-diaminocyclohexane, aminoethylethanolamine, hydrazine and hydrazine hydrate.

The amount of the diamine is preferably 0 wt% -5 wt%, based on the amount of the solid components of the system as 100 wt%.

The amount of the diamine is most preferably 0.2 wt% - 2.5wt%, based on the amount of the solid components of the system as 100 wt%.

### System

Said system preferably does not contain any free organic amine.

Said free organic amine is preferably one or more of the following: triethylamine, dimethylcyclohexylamine, ethyldiethylpropylamine, ammonia, diethanolamine, triethanolamine, dimethylethanolamine, methyldiethanolamine and aminomethylpropanol.

Said system preferably does not comprise any amine compound having an amino functionality of greater than 2.

Said amine compound having an amino functionality of greater than 2 is preferably one or more of the following: diethylene triamine and 1,8-diamino-4-aminomethyloctane.

The system may further comprise an external emulsifier.

The amount of the external emulsifier is preferably 0.001 wt% - 10 wt%, based on the amount of the system as 100 wt%.

The external emulsifier is preferably a fatty alcohol polyether, most preferably one or more of the following: an aliphatic ethylene glycol polyether and an aliphatic propylene glycol polyether.

### Aqueous polyurethane-urea dispersion

The solid content of the aqueous polyurethane-urea dispersion is preferably 20 - 70 wt%, further preferably 30 - 65 wt%, most preferably 35 - 60 wt%, based on the amount of the aqueous polyurethane-urea dispersion as 100 wt%.

The pH value of the aqueous polyurethane-urea dispersion is preferably 6 - 7. The pH value is measured at 23 °C with PB-10 pH-meter from Sartorius AG, Germany.

The particle size of the aqueous polyurethane-urea dispersion is preferably 150 nm - 400 nm, further preferably 150 nm - 300 nm, most preferably 150 nm - 220 nm. The particle size is measured with the laser spectrometry. Specifically, the aqueous polyurethane-urea dispersion is diluted with deionized water, and then measured with the laser particle size analyzer, Zetasizer Nano ZS 3600 from Malvern Instruments Ltd.

The viscosity of the aqueous polyurethane-urea dispersion is preferably 10 mPa·s - 300 MPa·s, further preferably 120 mPa·s - 300 MPa·s, most preferably 200mPa·s - 300 MPa·s. The viscosity is measured at 23 °C according to DIN 53019 with a rotary viscometer DV-II+Pro from Brookfield Inc.

### Preparation process for the aqueous polyurethane-urea dispersion

The preparation of the aqueous polyurethane-urea dispersion can be carried out in a homogeneous system via one or more steps, or partially in a dispersion phase in the case of a multi-step reaction. When the reaction of step b is partially or completely finished, the step of dispersing, emulsifying or dissolving is carried out, and then optionally the addition polymerization or modification is further carried out in a dispersion phase.

The process for preparing the aqueous polyurethane-urea dispersion provided according to the present invention can comprise the following steps:
a. reacting some or all of a polyisocyanate mixture, a polyester polyol having a melting temperature of greater than 32 °C and an optional monohydroxy polyether to obtain a prepolymer, wherein the reaction is carried out in presence of an optional solvent that is miscible with water but inert to the isocyanate group;
b. reacting the prepolymer solution, an emulsifier, the polyisocyanate mixture that has not been added in step a, a polyester polyol having a melting temperature of greater than 32 °C that has not been added in step a, an optional monohydroxy polyether that has not been added in step a and an optional diamine to obtain the polyurethane-urea; and
c. before, during and after step b, water and an optional emulsifier are introduced to obtain the aqueous polyurethane-urea dispersion.

The process for preparing the aqueous polyurethane-urea dispersion provided according to the present invention can comprise the following steps:
a. reacting some or all of a polyisocyanate mixture, a polyester polyol having a melting temperature of greater than 32 °C and an optional monohydroxy polyether to obtain a prepolymer, wherein a solvent that is miscible with water but inert to the isocyanate group is optionally added after the reaction to dissolve the prepolymer;
b. reacting the prepolymer, an emulsifier, the polyisocyanate mixture that has not been added in step a, a polyester polyol having a melting temperature of greater than 32 °C that has not been added in step a, an optional monohydroxy polyether that has not been added in step a and an optional diamine to obtain the polyurethane-urea; and
c. before, during and after step b, water and an optional emulsifier are introduced to obtain the aqueous polyurethane-urea dispersion.

The solvent that is miscible with water but inert to the isocyanate group is preferably one or more of the following: acetone, butanone, tetrahydrofuran, acetonitrile, dipropylene glycol dimethyl ether and 1-methyl-2-pyrrolidone, most preferably acetone and/or butanone.

The solvent that is miscible with water but inert to the isocyanate group can be subjected to a reaction under normal pressure or elevated pressure.

All techniques known in the prior art can be used to prepare the aqueous polyurethane-urea dispersion of the present invention, for example, an emulsifier/shear force method, an acetone method, a prepolymer mixing method, a melting emulsification method, a ketoimine method and a solid spontaneous dispersion method or a method derived therefrom and the like, preferably the melting emulsification method or the acetone method, most preferably the acetone method. These methods are summarized in Methoden der organischen Chemie (Houben-Weyl, Erweiterungs- und Folgebände zur 4. Auflage, Band E20, H. Bartl und J. Falbe, Stuttgart, New York, Thieme 1987, S. 1671-1682).

For the acetone method, in general, all or some of the polyisocyanate and the polyester polyol having a melting temperature of greater than 32 °C are firstly introduced to react to prepare the prepolymer, the reaction is optionally carried out in presence of a solvent that is miscible with water but inert to the isocyanate group, preferably without any solvent, but heating to a higher temperature, preferably 50 - 120 °C.

In order to increase the reaction rate of step a, a catalyst conventionally used in the preparation of the prepolymer can be used, for example, triethylamine, 1,4-diazabicyclo-[2,2,2]-octane, tin dioctoate or dibutyltin dilaurate, preferably dibutyltin dilaurate.

The catalyst can be placed in the reactor simultaneously with the components of step a, or may be added later.

The degree of conversion of the components in step a can be obtained by measuring the content of NCO-groups in the components. For this purpose, the chosen samples can be simultaneously subjected to spectroscopic measurements, such as infrared or near-infrared spectroscopy, as well as refractive index determination or chemical analysis, such as titration.

The prepolymer may be in a solid state or in a liquid state.

Any latent ionic groups present in the prepolymer are partially or completely reacted with a neutralizing agent to convert into the ionic form. The degree of neutralization may be from 50 - 125 mol%, preferably from 70 - 100 mol%.

If the water for dispersing already contains a neutralizing agent, the neutralization can also be carried out simultaneously with the dispersing.

The equivalent ratio of the isocyanate-reactive groups of the compounds for the chain growth in step b to the free isocyanate groups (NCO) of the prepolymer can be 40 - 100 mol%, preferably 50 - 100 mol%.

The components in step b may optionally be used in the form of water dilution or solvent dilution alone or in combination, and the order of addition may be any order. The content of water or solvent is preferably 70 - 95 wt%, based on the amount of the aqueous polyurethane-urea dispersion as 100 wt%.

A strong shear such as vigorous stirring can be used in step c.

The solvent present in the aqueous polyurethane-urea dispersion may be removed by distillation. The solvent can be removed during step b or step c.

The amount of the organic solvent remained in the aqueous polyurethane-urea dispersion is preferably less than 1.0 wt%, based on the amount of the aqueous polyurethane-urea dispersion as 100 wt%.

### Composition

The composition comprising the aqueous polyurethane-urea dispersion may be coatings, adhesives, sealants or printing inks.

The aqueous dispersions can be used alone or in combination with additives known in the technologies of coatings, adhesives, sealants or printing inks.

The additive may be one or more of the following: auxiliary adhesive, lubricant, emulsifier, light stabilizer, antioxidant, filler, anti-settling agent, antifoaming agent, wetting agent, flow regulator, antistatic agent, film forming aid, reactive diluent, plasticizer, neutralizer, catalyst, thickener, pigment, dye, tackifier and matting agent.

The light stabilizer can be a UV absorber and/or a sterically hindered amine.

The selection and use metering of the additive is in principle known to a person having ordinary skill in the art and readily determined.

The aqueous polyurethane-urea dispersion of the present invention can also be mixed with other aqueous or solvent-containing oligomer or polymer, and used together, for example, with aqueous or solvent-containing polyester, polyurethane, polyurethane-polyacrylate, polyacrylate, polyether, polyester-polyacrylate, alkyd resin, addition polymer, polyamide/imide or polyepoxide. The compatibility of such mixtures must be tested in each case by using a simple preliminary test.

The aqueous polyurethane-urea dispersion of the present invention can also be mixed with compound(s) having other functional groups such as carboxyl, hydroxyl and/or blocked isocyanate groups and used together.

The coatings, adhesives, sealants or printing inks of the present invention are obtained by processing according to methods known to those skilled in the art.

### Adhesive

The tensile strength of the film formed after the drying of the adhesive is preferably greater than 15 MPa and less than 200 MPa, further preferably 25 MPa -50 MPa, still preferably 35 MPa - 50 MPa, most preferably 40 MPa - 50 MPa.

The elongation at break of the film is preferably greater than 800 % and less than 5000 %, further preferably 1000 % - 2500 %, still preferably 1800 % -2200 %, most preferably 2000 % - 2200 %.

The 100% modulus of the film is preferably greater than 1.2 MPa and less than 100 MPa, most preferably 2 MPa - 5 MPa, and the 100 % modulus is obtained by testing at 23±2 °C and 50±5 % relative humidity acc ording to DIN 53504.

### Adhesion article

The substrate is preferably one or more of the following: rubber, plastic, paper, cardboard, wood, textile, metal, alloy, fabric, fiber, artificial leather, leather, inorganic material, human or animal hair, and human or animal skin, most preferably one or more of the following: rubber and plastic.

The adhesion article is preferably a sole or a shaft of a shoe.

The adhesion article is preferably a film or a wood.

### Examples

Unless defined otherwise, all technical and scientific terms used herein have the same meanings as those generally understood by those skilled in the art to which the invention pertains. When the definition of a term in this specification conflicts with the meaning generally understood by those skilled in the art to which the invention pertains, the definition described herein will dominate.

Unless otherwise indicated, all numbers used in the specification and claims, expressing quantities of ingredients, reaction conditions and the like, to be understood as being modified by the term "about". Accordingly, unless indicated to the contrary, the numerical parameters set forth herein are approximations that can be varied as desired.

As used herein, "and/or" refers to one or all of the elements mentioned.

As used herein, "comprise" and "contain" encompasses the case of only the elements mentioned being present and the case of besides the elements mentioned, other elements not mentioned being present too.

All percentages in the present invention are by weight unless otherwise indicated.

The analytical measurements of the present invention are carried out at 23±2 °C unless otherwise stated.

The solid content of the aqueous polyurethane-urea dispersion is measured according to DIN-EN ISO 3251 by using a moisture analyzer HS153 from Mettler Toledo Ltd.

The isocyanate group (NCO) content is measured by volume according to DIN-EN ISO 11909, and the measured data include the free and latent free NCO contents. The aqueous polyurethane-urea dispersion was diluted with deionized water and then measured at 23 °C for the particle size with the laser spectrometry (measured with the laser particle size analyzer, Zetasizer Nano ZS 3600, available from Malvern Instruments Ltd.).

The viscosity of the aqueous polyurethane-urea dispersion was measured at 23 °C according to DIN 53019 with a rotary viscometer, DV-II+Pro., available from Brookfield Inc.

The pH value of the aqueous polyurethane-urea dispersion was measured at 23 °C with PB-10 pH-meter available from Sartorius AG, Germany.

### Raw materials and reagents

Polyester I: 1,4-butanediol polyadipate diol, OH value = 50, melting temperature = 49°C, melting enthalpy = 91.0 J/g, number-average molecular weight = 2323 g/mol, commercially available from Covestro AG, Germany.

Polyester II: a polyester diol comprised of 1,6-hexanediol, neopentyl glycol and adipic acid, OH value = 66, number-average molecular weight = 1691 g/mol, commercially available from Covestro AG, Germany.

Desmodur®H: 1,6-hexamethylene diisocyanate, commercially available from Covestro AG, Germany.

Desmodur®W: dicyclohexylmethane diisocyanate, commercially available from Covestro AG, Germany.

L-lysine: 50 % aqueous L-lysine solution, commercially available from XIAMEN FEIHE CHEMICAL CO., LTD.

AAS: an diamino sodium sulfonate, NH₂-CH₂CH₂-NH-CH₂CH₂-SO₃Na, at a concentration of 45 wt% in water, commercially available from Covestro AG. Borchi® Gel A LA: a thickener, commercially available from OMG Borchers GmbH, Germany.

### Comparative Example 1

450 g of Polyester I and 42.5 g of Polyester II were dehydrated at 110 °C under 15 mbar for 1 hour, and then 2.25 g of 1,4-butanediol was further added. The mixture was cooled while stirred. 56.8 g of Desmodur® H was added at 60 °C. The resulting mixture was stirred at 80 - 90 °C until the isocyanate content of 1.3 w% was reached. Then the mixture was dissolved in 760 g of acetone and cooled to 50 °C to produce a reaction solution. A solution of 5.2 g of AAS, 0.7 g of dihydroxyethylamine and 4.0 g of L-lysine in 57 g of water was added to the reaction solution. The resulting mixture was vigorously stirred for 30 minutes, and then 500 g of water was added to disperse the mixture. Then acetone was removed by distillation to produce the comparative aqueous polyurethane-urea dispersion 1.

### Comparative Example 2

450 g of Polyester I and 42.5 g of Polyester II were dehydrated at 110 °C under 15 mbar for 1 hour, and then 2.25 g of 1,4-butanediol was further added. The mixture was cooled while stirred. 31.3 g of Desmodur® H was added at 60 °C, and then added 40.1 g of Desmodur®W. The resulting mixture was stirred at 80 - 90 °C until the isocyanate content of 1.3 wt% was reached. Then the mixture was dissolved in 780 g of acetone and cooled to 50 °C to produce a reaction solution. A solution of 5.7 g of AAS, 0.7 g of dihydroxyethylamine and 1.4 g of hydroxyethylethylene diamine in 59 g of water was added to the reaction solution. The resulting mixture was vigorously stirred for 30 minutes, and then 510 g of water was added to disperse the mixture. Then acetone was removed by distillation, and a gel was formed during the distillation.

### Example 1

450 g of Polyester I and 42.5 g of Polyester II were dehydrated at 110 °C under 15 mbar for 1 hour, and then 2.25 g of 1,4-butanediol was further added. The mixture was cooled while stirred. 53.0 g of Desmodur® H was added at 60 °C, and then added 5.9 g of Desmodur® W. The resulting mixture was stirred at 80 - 90 °C until the isocyanate content of 1.3 wt% was reached. Then the mixture was dissolved in 760 g of acetone and cooled to 50 °C to p reduce a reaction solution. A solution of 5.7 g of AAS, 0.7 g of dihydroxyethylamine and 1.4 g of hydroxyethylethylene diamine in 59 g of water was added to the reaction solution. The resulting mixture was vigorously stirred for 30 minutes, and then 500 g of water was added to disperse the mixture. Then acetone was removed by distillation to produce the aqueous polyurethane-urea dispersion 1.

### Example 2

450 g of Polyester I and 42.5 g of Polyester II were dehydrated at 110 °C under 15 mbar for 1 hour, and then 2.25 g of 1,4-butanediol was further added. The mixture was cooled while stirred. 55.3 g of Desmodur® H was added at 60 °C, and then added 2.4 g of Desmodur® W. The resulting mixture was stirred at 80 - 90 °C until the isocyanate content of 1.3 % was reached. Then the mixture was dissolved in 760 g of acetone and cooled to 50 °C to produce a reaction solution. A solution of 5.7 g of AAS, 0.7 g of dihydroxyethylamine and 1.4 g of hydroxyethylethylene diamine in 59g of water was added to the reaction solution. The resulting mixture was vigorously stirred for 30 minutes, and then 500 g of water was added to disperse the mixture. Then acetone was removed by distillation to produce the aqueous polyurethane-urea dispersion 2.

### Example 3

450 g of Polyester I and 42.5 g of Polyester II were dehydrated at 110 °C under 15 mbar for 1 hour, and then 2.25 g of 1,4-butanediol was further added. The mixture was cooled while stirred. 45.8g of Desmodur® H was added at 60 °C, and then added 17 g of Desmodur® W. The resulting mixture was stirred at 80 - 90 °C until the isocyanate content of 1.3 wt% was reached. Then the mixture was dissolved in 770 g of acetone and cooled to 50 °C to p reduce a reaction solution. A solution of 5.7 g of AAS, 0.7 g of dihydroxyethylamine and 1.4 g of hydroxyethylethylene diamine in 59 g of water was added to the reaction solution. The resulting mixture was vigorously stirred for 30 minutes, and then 500 g of water was added to disperse the mixture. Then acetone was removed by distillation to produce the aqueous polyurethane-urea dispersion 3.

### Example 4

450 g of Polyester I and 42.5 g of Polyester II were dehydrated at 110 °C under 15 mbar for 1 hour, and then 2.25 g of 1,4-butanediol was further added. The mixture was cooled while stirred. 38.4 g of Desmodur® H was added at 60 °C, and then added 28.6 g of Desmodur® W. The resulting mixture was stirred at 80 - 90 °C until the isocyanate content of 1.3 wt% was reached. Then the mixture was dissolved in 775 g of acetone and cooled to 50 °C to produce a reaction solution. A solution of 5.7 g of AAS, 0.7 g of dihydroxyethylamine and 1.4 g of hydroxyethylethylene diamine in 59 g of water was added to the reaction solution. The resulting mixture was vigorously stirred for 30 minutes, and then 500 g of water was added to disperse the mixture. Then acetone was removed by distillation to produce the aqueous polyurethane-urea dispersion 4.

The parameters of the aqueous polyurethane-urea dispersions of Examples and Comparative Examples were listed in Table 1.

**Table 1: Parameters of the aqueous polyurethane-urea dispersions**

| | Polyisocyanate content in the system/wt% | Solid content of the aqueous polyurethane-urea dispersion /wt% | pH value of the aqueous polyurethane-urea dispersion | Particle size of the aqueous polyurethane-urea dispersion /nm | Viscosity of aqueous polyurethane-urea dispersion /mPa.s |
|---|---|---|---|---|---|
| Ex. 1 | Desmodur® W: 0.42 | 49.95 | 6.80 | 225.5 | 191 |
| | Desmodur® H: 9.86 | | | | |
| Ex.2 | Desmodur® W: 1.05 | 51.09 | 6.74 | 200.9 | 247 |
| | Desmodur® H: 9.44 | | | | |
| Ex.3 | Desmodur® W: 3.01 | 52.30 | 6.78 | 277.9 | 140 |
| | Desmodur® H: 8.11 | | | | |
| Ex.4 | Desmodur® W: 5.03 | 51.28 | 6.77 | 388.8 | 30 |
| | Desmodur® H: 6.75 | | | | |
| Comp. Ex.1 | Desmodur® H: 10.15 | 51.17 | 6.57 | 324 | 100 |
| Comp. Ex. 2 | Desmodur® W: 7.00 | Forming a gel | | | |
| | Desmodur® H: 5.41 | | | | |

### Performance Test

### Preparation method for test film

The viscosities of the aqueous polyurethane-urea dispersions of Examples and Comparative Examples were adjusted to 4000 mPa·s - 8000 MPa·s with Borchi® Gel A LA, and stored overnight at room temperature for aging. Then the aqueous polyurethane-urea dispersions of Examples and Comparative Examples were poured onto the release paper, separately, and the wet films were formed on the release paper with a 500 micron film applicator. The wet films were placed in a 50 °C oven and dried for 30 minutes, then placed in a 150 °C oven and dried for 3 minutes. Talc powder was applied to both sides of the films to obtain a film for testing with a film thickness of 0.17±0.04 mm.

### Testing method

The 100 % modulus, the elongation at break and the tensile strength of the film were measured according to DIN 53504. The specific processes were as follows: the above prepared film was cut into a dumbbell shape; and the 100 % modulus, the elongation at break, and the stress and the tensile strength at a pull rate of 200 mm/minute of the film were measured at room temperature with a ZWICK universal material testing machine.

### Property reference values

Table 2 listed the property reference values of the film, including the stress, the tensile strength, the elongation at break and the 100% modulus.

**Table 2: Property reference values of the film**

| Property | Reference values |
|---|---|
| Stress /N/mm2 | >15 |
| Tensile Strength /MPa | >15 |
| Elongation at break /% | >800 |
| 100% modulus /MPa | >1.2 |

| | |
|---|---|
| Note: the higher the stress, the tensile strength, the elongation at break and the 100 % modulus of the film, the better the mechanical property of the film. | |

Table 3 shows the test results for the stress, the tensile strength, the elongation at break and the 100 % modulus of the film made from the aqueous polyurethane-urea dispersions of Examples and Comparative Examples.

**Table 3: Test results for the film's properties**

| Example/Comparative Example | Stress/N/mm² | Tensile Strength /MPa | elongation at break /% | 100% modulus/MPa |
|---|---|---|---|---|
| Example 1 | 28.7 | 28.0 | 1606.7 | 3.1 |
| Example 2 | 49.7 | 49.7 | 2160.3 | 3.7 |
| Example 3 | 36.0 | 35.7 | 1981.0 | 3.1 |
| Example 4 | 31.7 | 31.3 | 1235.3 | 3.4 |
| Comparative Example 1 | 12.7 | 12.3 | 1674.0 | 1.0 |
| Comparative Example 2 | The aqueous polyurethane-urea dispersion formed a gel in the preparation and could not produce a film for the property test. | | | |

It could be seen from Examples 1 - 4 that, if the content of Desmodur® W was 0.01 wt% - 6 wt% and the content of Desmodur® H was 0.01 wt% - 25 wt% in the system for preparation of the aqueous polyurethane-urea dispersion, on the basis of maintaining the elongation at break of the film made from the aqueous polyurethane-urea dispersion at a suitable level, the stress, the 100 % modulus and the tensile strength of the film were much higher than the reference values.

If the content of Desmodur® W was 7 wt% and the content of Desmodur® H was 5.41 wt% in the system for preparation of the aqueous polyurethane-urea dispersion, on the basis of maintaining the elongation at break of the film made from the aqueous polyurethane-urea dispersion at a suitable level, the stress, the 100 % modulus and the tensile strength of the film all failed to meet the requirement of the reference values. If the content of Desmodur® H was 10.15 wt% in the system for preparation of the aqueous polyurethane-urea dispersion and no Desmodur® W was contained, the aqueous polyurethane-urea dispersion gelatinized in the preparation process and the subsequent film process could not proceed.

It is understood by those skilled in the art that the present invention is not limited to the above specifics, and the present invention may be carried out in other forms when not deviating from the spirit or main features of the present invention. Therefore from every aspect, the described examples shall be construed as illustrative and not limiting. Thus the scope of the invention shall be defined by the claims and not the above description. Accordingly, any modification shall be considered as the present invention as long as it falls into the meaning and scope of an equivalent to what is claimed in the claims.

## Claims

1. An aqueous polyurethane-urea dispersion, which comprises a polyurethane-urea dispersed therein, wherein said polyurethane-urea is obtained from a reaction of a system comprising the following components:
A) a polyisocyanate mixture;
B) a polyester polyol having a melting temperature of greater than 32 °C, wherein the melting temperature is measured by using a DSC-7 from Perkin-Elmer at 20-100 °C according to DIN 65467, and taken from the first temperature-rising curve;
C) an emulsifier;
D) an optional monohydroxy polyether; and
E) an optional diamine;
which is **characterized in that**, said polyisocyanate mixture contains hexamethylene diisocyanate and dicyclohexylmethane diisocyanate, the amount of hexamethylene diisocyanate is 0.01 wt% - 25 wt%, the amount of dicyclohexylmethane diisocyanate is 0.01 wt% - 6 wt%, based on the amount of the system as 100 wt%.

2. The dispersion according to claim 1, which is **characterized in that**, the sum of the amount of hexamethylene diisocyanate and the amount of dicyclohexylmethane diisocyanate is greater than 50 wt%, preferably 60 wt% - 100 wt%, most preferably 80 wt% - 100 wt%, based on the amount of the polyisocyanate mixture as 100 wt%.

3. The dispersion according to claim 1, which is **characterized in that**, the amount of dicyclohexylmethane diisocyanate is 0.1 wt% - 5.5 wt%, preferably 0.1 wt% - 3.5 wt%, further preferably 0.5 wt% - 3.5 wt%, most preferably 0.5 wt% - 2 wt%, based on the amount of the system as 100 wt%.

4. The dispersion according to claim 1, which is **characterized in that**, the polyester polyol has a melting temperature of greater than 32 °C and less than 100 °C, most preferably greater than 40 °C and less than 60 °C, wherein the melting temperature is measured by using a DSC-7 from Perkin-Elmer at 20 - 100 °C according to DIN 65467, and taken from the first temperature-rising curve.

5. The dispersion according to claim 1 or 4, which is **characterized in that**, the polyester polyol has a number-average molecular weight of 400 - 5000, most preferably 900 - 3500, the number-average molecular weight is measured at 40 °C with the gel permeation chroma tography using tetrahydrofuran as the mobile phase and polystyrene as the standard control.

6. The dispersion according to claim 1, which is **characterized in that**, the emulsifier is a sulfonic acid compound.

7. The dispersion according to claim 1, which is **characterized in that**, the system does not comprise any free organic amine.

8. The dispersion according to claim 1, which is **characterized in that**, the system does not comprise any amine compound having an amino functionality of greater than 2.

9. A process for preparing the aqueous polyurethane-urea dispersion according to any of claims 1 - 8, which comprises the following steps:
a. reacting some or all of a polyisocyanate mixture, a polyester polyol having a melting temperature of greater than 32 °C and an optional monohydroxy polyether to obtain a prepolymer, wherein the reaction is carried out in presence of an optional solvent that is miscible with water but inert to the isocyanate group or a solvent that is miscible with water but inert to the isocyanate group is optionally added after the reaction to dissolve the prepolymer;
b. reacting the prepolymer, an emulsifier, the polyisocyanate mixture that has not been added in step a, a polyester polyol having a melting temperature of greater than 32 °C that has not been added in step a, an optional monohydroxy polyether that has not been added in step a and an optional diamine to obtain the polyurethane-urea; and
c. before, during and after step b, water and an optional emulsifier are introduced to obtain the aqueous polyurethane-urea dispersion.

10. An adhesive containing the aqueous polyurethane-urea dispersion according to any of claims 1 - 8.

11. An adhesion article comprising substrates that have been adhered by means of the adhesive according to claim 10.

12. The adhesion article according to claim 11, which is **characterized in that**, the substrate is one or more of the following: rubber, plastic, paper, cardboard, wood, textile, metal, alloy, fabric, fiber, artificial leather, leather, inorganic material, human or animal hair, and human or animal skin, most preferably one or more of the following: rubber and plastic.

13. The adhesion article according to claim 11, which is **characterized in that**, the adhesion article is a sole or a shaft of a shoe.

14. The adhesion article according to claim 11, which is **characterized in that**, the adhesion article is a film or a wood.

15. Use of the aqueous polyurethane-urea dispersion according to any of claims 1 - 8 in production of an adhesion article.
